# EUROPÄISCHE PATENTSCHRIFT

(11) **EP 2 938 093 B1**
(45) Veröffentlichungstag und Bekanntmachung des Hinweises auf die Patenterteilung: **03.10.2018**
(21) Anmeldenummer: 15162383.2
(22) Anmeldetag: 02.04.2015
(51) Int. Cl.: H04Q 9/00

(54) **FLURFÖRDERZEUG MIT EINER FAHRZEUGSTEUERUNG**
INDUSTRIAL TRUCK WITH AN VEHICLE CONTROL UNIT
CHARIOT DE MANUTENTION DOTÉ D'UNE COMMANDE DE VÉHICULE

(30) Priorität: 24.04.2014 DE 102014105763
(43) Veröffentlichungstag der Anmeldung: 28.10.2015
(73) Patentinhaber: Jungheinrich Aktiengesellschaft, 22047 Hamburg (DE)
(72) Erfinder: von Werder, Martin, 22949 Ammersbek (DE); Sellentin, Jörn, 24568 Kaltenkirchen (DE); Mänken, Dr. Frank, 24558 Henstedt-Ulzburg (DE); Liu, Yali, 22850 Norderstedt (DE)
(74) Vertreter: Hauck Patentanwaltspartnerschaft mbB

(56) Entgegenhaltungen:
- EP-A2- 2 692 569
- WO-A2-2012/030455
- US-A1- 2007 197 164
- QIANQIAN ZHANG ET AL: "Design of the Control System about Central Signals in Electric Vehicle", JOURNAL OF ELECTROMAGNETIC ANALYSIS AND APPLICATIONS, Bd. 02, Nr. 03, 1. Januar 2010 (2010-01-01), Seiten 189-194, XP055214259, ISSN: 1942-0730, DOI: 10.4236/jemaa.2010.23027

## Beschreibung

Die vorliegende Erfindung betrifft ein Flurförderzeug mit einer Fahrzeugsteuerung, einer Anzeigeeinheit, mindestens einer Batterie und einem Bus-System.

In einem Flurförderzeug ist in der Regel eine Vielzahl von Komponenten vorgesehen, die über ein Bus-System für einen Datenaustausch miteinander verbunden sind. Üblicherweise wird hierzu in der Regel eine Master-Follower-Struktur gewählt, die auch als Master-Slave-Struktur bezeichnet wird. In einer solchen Master-Follower-Struktur ist ein zentraler Master vorgesehen, der bei den Follower-Komponenten Daten abfragt, diese verarbeitet und an andere Follower-Komponenten Informationen weitergibt. Bei der Weitergabe der Informationen gibt der Master auch gezielte Steuerbefehle an die als Follower konfigurierten Komponenten weiter. Die Struktur ist baumartig verzweigt, so dass zwischen den einzelnen Followern keine direkte Kommunikation erfolgt.

Lithium-Ionen-Batterien besitzen ein meist in das Batteriegehäuse integriertes elektronisches Batteriemanagementsystem, das eine Reihe von Aufgaben durchführt. Die Aufgaben bestehen beispielsweise darin, eine Ausgleichsladung zwischen den Zellen der Lithium-Ionen-Batterie durchzuführen, die Batterie vor Überlast zu schützen und einen Ladezustand der Batterie zu ermitteln und gegebenenfalls auch weiterzuleiten. Diese Informationen können über das Bus-System an die Fahrzeugsteuerung übermittelt werden bzw. von der Fahrzeugsteuerung im Batteriemanagementsystem abgefragt werden.

Blei-Akkumulatoren können im Gegensatz zu Lithium-Ionen-Batterien ohne Batteriemanagementsystem eingesetzt werden. Es besteht daher das Bedürfnis, an Flurförderzeugen wahlweise Lithium-Ionen-Batterien oder Blei-Batterien einzusetzen, ohne dass die Fahrzeugsteuerung hierfür umprogrammiert werden muss.

Eine Umprogrammierung einer Fahrzeugsteuerung ist aufgrund der sicherheitsrelevanten Steuerroutinen stets mit großem Testaufwand verbunden.

Aus US 2011/0068719 A1 ist ein Batteriemanagementsystem bekannt, bei dem eine Anzeigeeinheit Batterieinformationen anzeigt, die von einer Batterieladesteuerung bereitgestellt werden.

Aus US 2012/0223678 A1 ist eine Batteriesteuerungseinrichtung bekannt, wobei bei Ausfall einer Master-Steuereinheit für einen Stack die Funktionen von einem übergeordneten Batteriemanagementsystem übernommen werden.

Aus DE 10 2011 100 923 A1 ist ein Flurförderzeug mit mindestens einer Lithium-Ionen-Batterie bekannt geworden, das mit einer Steuerung und einem CAN-Bus ausgestattet ist, über den Daten- und Steuersignale von der Steuerung empfangen und über diese abgesetzt werden. Die bei dem bekannten Flurförderzeug eingesetzte Batterie weist eine Batteriesteuerung auf, die einen Batteriezustand der Batterie überwacht und Daten zu dem überwachten Betriebszustand der Batterie über den CAN-Bus in die Steuerung des Flurförderzeugs sendet. Hierbei sendet die Batteriesteuerung der Batterie als Follower an die Fahrzeugsteuerung, die die Funktion eines Masters übernommen hat.

Aus DE 10 2009 041 434 A1 ist ein Verfahren zum Aufwecken von Teilnehmern eines CAN-Bus-Systems bekannt geworden, bei dem ein Erfassungsmittel das wenigstens eine vorgegebene Signaleigenschaft der auf dem Bus-System übermittelten Signale erfasst und darauf einen Aufweckvorgang einleitet.

Aus der Veröffentlichung "Design of the Control System about Central Signals in Electric Vehicle" der Autoren Zhang et al., veröffentlicht in J. Electromagentic Analysis & Applications, 2010, 2: 189 - 194 ist ein auf einem CAN-Bus basierendes Kommunikationsnetzwerk in elektrischen Fahrzeugen bekannt geworden. Über das CAN-BUS-System werden u. a. ein Batteriemanagementsystem und eine Motorsteuerung mit einem Kontrollsystem verbunden. Weiterhin ist das Kontrollsystem über eine RS232-Schnittstelle mit einem LC-Display verbunden, welches der Wiedergabe von Fahrzeugstatusinformationen dient.

Aus WO 2012/030455 A2 ist ein Batteriemanagementsystem zum gezielten Ladungsausgleich zwischen in Gruppen zusammengefassten Batteriezellen bekannt geworden.

EP 2 692 569 A2 betrifft die Energieversorgung einer elektrischen Vorrichtung durch ein Elektrofahrzeug. Über einen mit dem Ladeanschluss des Elektrofahrzeugs verbindbaren Adapter wird ein Relais zur Leistungsausgabe aus dem Ladeanschluss des Elektrofahrzeugs bewegt, um über die Batterie des Elektrofahrzeugs die elektrische Vorrichtung zu versorgen.

Der Erfindung liegt die Aufgabe zugrunde, ein Flurförderzeug mit einer Fahrzeugsteuerung und einer Batterie bereitzustellen, das ohne Umprogrammierung der Fahrzeugsteuerung mit geringem Aufwand den Einsatz von Batterien ohne Batteriemanagementsystem und Batterien mit Batteriemanagementsystem zulässt.

Erfindungsgemäß wird die Aufgabe durch eine Vorrichtung mit den Merkmalen aus Anspruch 1 gelöst. Vorteilhafte Ausgestaltungen bilden den Gegenstand der Unteransprüche.

Das erfindungsgemäße Flurförderzeug besitzt eine Fahrzeugsteuerung, eine Anzeigeeinheit, mindestens eine Batterie und ein Bus-System. Das Bus-System verbindet mehrere Komponenten miteinander zum Austausch von Daten und Steuersignalen. Die Fahrzeugsteuerung ist ausgebildet, um in einem Master-Betrieb Steuersignale für in einem Follower-Betrieb arbeitende Komponenten abzusetzen. Ferner weist das erfindungsgemäße Flurförderzeug eine Anzeigeeinheit auf, die in dem Follower-Betrieb von der Steuerung Steuersignale und Daten zu anzuzeigenden Zuständen des Fahrzeugs empfängt und graphisch anzeigt. Zudem ist das erfindungsgemäße Flurförderzeug mit einer Batterie aus mehreren Batteriezellen und einer Batteriesteuerung ausgestattet, die den Zustand der Batteriezellen überwacht. Erfindungsgemäß ist die Anzeigeeinheit ausgebildet, um in einem Master-Betrieb von der Batteriesteuerung anzuzeigende Zustände der Batterie abzufragen sowie zu empfangen und anschließend darzustellen. Ein wesentliches Merkmal des erfindungsgemäßen Flurförderzeugs liegt darin, dass die Anzeigeeinheit einerseits als Komponente im Follower-Betrieb in das Kommunikationsnetzwerk eingebunden ist. In diesem Zustand wird die Anzeigeeinheit von der im Master-Betrieb arbeitenden Steuerung des Flurförderzeugs über das Bus-System mit Daten versorgt. Zugleich ist die Anzeigeeinheit ausgebildet, um mit einer Batterie, die eine Batteriesteuerung aufweist, im Master-Betrieb zu arbeiten. Hier ist dann die Batterie mit ihrer Batteriesteuerung im Follower-Betrieb und die Anzeigeeinheit gibt die Daten und Steuersignale für die Batterie im Master-Betrieb vor. Die Anzeigeeinheit kann selbstverständlich auch bei einem Flurförderzeug, dessen Batterie keine Batteriesteuerung besitzt, eingesetzt werden. In diesem Fall zeigt die Anzeigeeinheit die von der Fahrzeugsteuerung empfangenen Daten an.

In einer bevorzugten Weiterbildung ist die Anzeigeeinheit ausgebildet, um in einem Follower-Betrieb anzuzeigende Zustände der Batterie von der Fahrzeugsteuerung zu empfangen. In dieser Ausgestaltung agiert die Anzeigeeinheit wie eine Komponente im Follower-Betrieb und wird von der Fahrzeugsteuerung mit Ereignis- und Fehlermeldungen des Fahrzeugs versorgt.

Von besonderem Interesse ist das Verhalten des Flurförderzeugs bei Anschluss eines Ladegeräts für die Batterie. Hier ist der Datenaustausch in dem Flurförderzeug bei Anschluss eines externen Ladegeräts anders als bei Einsatz eines internen, an Bord befindlichen Ladegeräts. In einer bevorzugten Ausgestaltung ist für ein an oder in dem Fahrzeug befindliches internes Ladegerät vorgesehen, dass dieses mit der im Master-Betrieb arbeitenden Anzeigeeinheit verbunden ist, wobei die Anzeigeeinheit Daten der Batteriesteuerung an das ebenfalls im Follower-Betrieb arbeitende Ladegerät weiterleitet. Bei dieser Ausgestaltung übernimmt die Anzeigeeinheit die Funktion des Masters, der den für den Ladevorgang erforderlichen Austausch von Daten und Signalen zwischen der Batteriesteuerung und dem Ladegerät sicherstellt. Alternativ oder zusätzlich kann ein externes Ladegerät an die Batterie angeschlossen werden, wobei dieses während des Ladevorgangs im Master-Betrieb Daten und Signale mit der Batteriesteuerung austauscht. Bei beiden Ausgestaltungen arbeitet die Batteriesteuerung im Follower-Betrieb. Bei dem externen Ladegerät übernimmt dieses die Rolle des Master-Betriebs. Bei einem internen Ladegerät übernimmt die Anzeigeeinheit die Rolle des Master-Betriebs.

In einer bevorzugten Weiterbildung des erfindungsgemäßen Verfahrens legt die Anzeigeeinheit ein eine Wegfahrsperre auslösendes Signal an die Fahrzeugsteuerung an, während ein Ladevorgang erfolgt.

Bevorzugt handelt es sich bei der Batterie um eine Ionen-Batterie, insbesondere eine Lithium-Ionen-Batterie.

Bevorzugte Ausgestaltungen der Steuerungen in einem erfindungsgemäßen Flurförderzeug werden nachfolgend anhand von Beispielen näher erläutert. Es zeigen:
- Fig. 1: den hierarchischen Aufbau der Steuerung einer Batterie mit einem Batteriemanagementsystem (BMS),
- Fig. 2: den hierarchischen Aufbau bei der Verwendung eines internen Ladegeräts und
- Fig. 3: den Aufbau bei Verwendung eines externen Ladegeräts.

Die Erfindung bezieht sich auf die Kommunikation von mehreren Komponenten über einen Daten-Bus. Der Daten-Bus bildet einen gemeinsamen Übertragungskanal für die beteiligten Komponenten, so dass eine Struktur festgelegt werden muss, die ein gemeinsames und gleichzeitiges Senden auf dem Datenkanal verhindert. Hierbei wird auf die Master-/Follower-Struktur zurückgegriffen, die gelegentlich auch als Master-/Slave-Struktur oder offiziell als Device 0- und Device 1-Struktur bezeichnet wird. Kernpunkt der Struktur ist, dass die Follower nur über den Datenkanal senden dürfen, wenn sie hierzu von der Master-Steuerung aufgefordert wurden. Auf diese Weise erfolgt ein hierarchischer Zugriff auf den Datenkanal, der einen Datenaustausch zu jeder Zeit sichergestellt.

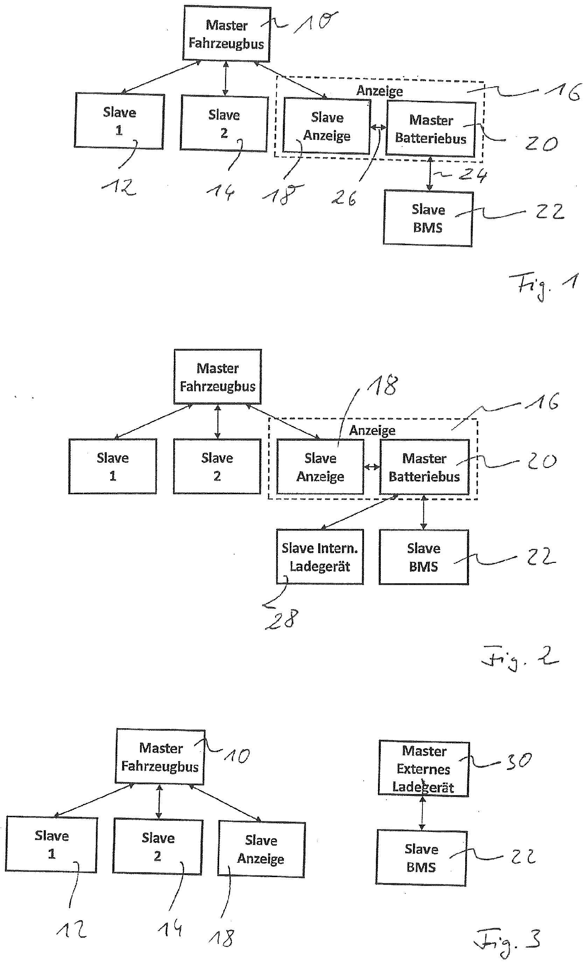

Fig. 1 zeigt in einem schematischen Aufbau eine übergeordnete Fahrzeugsteuerung 10, die als Master konfiguriert ist und auf die Komponenten 12, 14, 16 in dem Flurförderzeug zugreift. Bei den Komponenten 12 und 14 handelt es sich um nicht näher spezifizierte Komponenten, hierbei können beispielsweise Antriebseinheit, Bremseinheit, Hubeinrichtung oder dergleichen vorgesehen sein. Die Anzeigeeinheit 16 ist logisch zweigeteilt und besitzt eine im Follower-Betriebsmodus arbeitende Anzeige 18, die über den Daten-Bus von der Fahrzeugsteuerung 10 ihre Daten empfängt und diese graphisch darstellt. Diese Anzeige kann vollständig in einem Follower-Betriebsmodus arbeiten, da sämtliche steuerungsrelevanten Daten in der Fahrzeugsteuerung 10 vorliegen und über diese auch zur Anzeige gebracht werden können.

Die Anzeigeeinheit 16 enthält ferner eine Steuerung 20, die für einen Master-Betrieb konfiguriert ist. Als solche kommuniziert die Steuerung 20 mit einem als Follower konfigurierten Batteriemanagementsystem 22. Entlang dem Batterie-Bus 24 gibt die als Master konfigurierte Steuerung 20 die Kommunikation vor und steuert das Batteriemanagementsystem 22 der Batterie entsprechend an. Über eine interne Kommunikation 26 kann die Steuerung 20 die aus dem Batteriemanagementsystem ausgelesenen Daten über die Anzeige 18 darstellen.

Der besondere Vorteil der vorgesehenen Anzeige 16 besteht darin, dass die Fahrzeugsteuerung 10 mit ihren sicherheitsrelevanten Routinen nicht umprogrammiert werden muss, um Daten aus dem Batteriemanagementsystem der Batterie in der Anzeigeeinheit darzustellen. Vielmehr kann die Fahrzeugsteuerung 10 sowohl bei Flurförderzeugen, die mit Batterien ohne Batteriemanagementsystem, wie beispielsweise mit Blei-Akkumulatoren gespeiste Fahrzeuge eingesetzt werden, als auch bei Fahrzeugen, bei denen eine Kommunikation mit dem Batteriemanagement gewünscht oder erforderlich ist.

Fig. 2 zeigt die Kommunikationsstruktur bei Verwendung eines internen Ladegeräts 28. Das interne Ladegerät 28 kommuniziert mit der Master-Einheit 20 der Anzeigeeinheit 16. Hierbei kann das Ladegerät 28 Daten mit dem Batteriemanagementsystem 22 austauschen. Die elektrische Verbindung zur Übertragung des Ladestroms von dem Ladegerät 28 an die Batterie ist in Fig. 2 nicht dargestellt.

Fig. 3 zeigt die Datenkommunikation, wie sie bei der Verwendung eines externen Ladegeräts 30 auftritt. Bei der Verwendung eines externen Ladegeräts kommuniziert dieses als Master ausschließlich mit dem Batteriemanagementsystem 22, das im Follower-Betrieb arbeitet. Davon unabhängig, kommuniziert die Fahrzeugsteuerung 10 mit den weiteren Komponenten 12, 14 sowie der Anzeige 18.

## Patentansprüche

1. Flurförderzeug mit einer Fahrzeugsteuerung (10), einer Anzeigeeinheit (16), mindestens einer Batterie und einem Bus-System, wobei
- das Bus-System mehrere Komponenten (12, 14, 16) zum Austausch von Daten und Steuersignalen miteinander verbindet,
- die Fahrzeugsteuerung (10) in einem Master-Betrieb Steuersignale für in einem Follower-Betrieb arbeitende Komponenten (12, 14, 16) absetzt,
- die Anzeigeeinheit (16), als eine der Komponenten, in dem Follower-Betrieb von der Fahrzeugsteuerung (10) Steuersignale und Daten zu anzuzeigenden Zuständen des Flurförderzeugs empfängt und anzeigt,
- und die Batterie mehrere Batteriezellen und eine Batteriesteuerung (22) aufweist, die den Zustand der Batteriezellen überwacht,
**dadurch gekennzeichnet, dass**
- die Anzeigeeinheit (16) in einem Master-Betrieb von der Batteriesteuerung (22) anzuzeigende Zustände der Batterie abfragt, empfängt und anzeigt.

2. Flurförderzeug nach Anspruch 1, **dadurch gekennzeichnet, dass** die Anzeigeeinheit (16) ausgebildet ist, um in dem Follower-Betrieb anzuzeigende Zustände der Batterie von der Fahrzeugsteuerung (10) zu empfangen.

3. Flurförderzeug nach Anspruch 1 oder 2, **dadurch gekennzeichnet, dass** zusätzlich an oder in dem Fahrzeug ein Ladegerät (28) vorgesehen ist, das mit der im Master-Betrieb arbeitenden Anzeigeeinheit (16) verbunden ist und die Anzeigeeinheit (16) Daten der Batteriesteuerung an das im Follower-Betrieb arbeitende Ladegerät (28) weiterleitet.

4. Flurförderzeug nach einem der Ansprüche 1 bis 3, **dadurch gekennzeichnet, dass** bei Anschluss eines externen Ladegeräts (30) an die Batterie, dieses während des Ladevorgangs im Master-Betrieb Daten und Steuersignale mit der Batteriesteuerung (22) austauscht.

5. Flurförderzeug nach einem der Ansprüche 1 bis 4, **dadurch gekennzeichnet, dass** die Anzeigeeinheit (16) ein eine Wegfahrsperre auslösendes Signal an die Fahrzeugsteuerung (10) anlegt, während ein Ladevorgang erfolgt.

6. Flurförderzeug nach einem der Ansprüche 1 bis 5, **dadurch gekennzeichnet, dass** die Batterie als Ionen-Batterie, insbesondere als Lithium-Ionen-Batterie, ausgebildet ist.

7. Flurförderzeug nach einem der Ansprüche 1 bis 6, **dadurch gekennzeichnet, dass** das Bus-System als ein CAN-Bus-System ausgebildet ist.

## Claims

1. An industrial truck with a vehicle command device (10), a display unit (16), at least one battery and a bus-system, wherein
• the bus-system connects several components (12, 14, 16) to each other for exchange of data and command signals,
• in a master operation, the vehicle command (10) outputs command signals for the components (12, 14, 16) working in a follower-operation,
• as one of the components, the display unit (16) receives and displays command signals and data concerning conditions of the industrial truck from the vehicle command device (10) to be displayed in the follower operation,
• and the battery comprises several battery cells and a battery command device (22), which monitors the condition of the battery cells,
**characterised in that**
• in a master operation, the display unit (16) retrieves, receives and displays conditions of the battery to be displayed from the battery command device (22).

2. The industrial truck according to claim 1, **characterised in that** the display unit (16) is designed to receive conditions of the battery to be displayed from the vehicle command device (10) in the follower operation.

3. An industrial truck according to claim 1 or 2, **characterised in that** a charger (28) is provided within or on the vehicle in addition, which is connected to the display unit (16) working in the master operation, and the display unit (16) forwards data of the battery command device to the charger (28) working in the follower-operation.

4. An industrial truck according to one of the claims 1 to 3, **characterised in that** when an external charger (30) is connected to the battery, it exchanges data and command signals with the battery command device (22) during the charging operation in the master operation.

5. An industrial truck according to one of the claims 1 to 4, **characterised in that** during a charging operation, the display unit (16) applies a signal triggering a vehicle immobilizer system to the vehicle command device (10).

6. An industrial truck according to one of the claims 1 to 5, **characterised in that** the battery is realised as an ion battery, a lithium ion battery in particular.

7. An industrial truck according to one of the claims 1 to 6, **characterised in that** the bus-system is realised as a CAN-bus system.

## Revendications

1. Chariot de manutention avec un dispositif de commande du véhicule (10), une unité d'affichage (16), au moins une batterie et un réseau de bus, dans lequel
• le réseau de bus relie plusieurs composants (12, 14, 16) l'un à l'autre pour l'échange de données et signaux de commande,
• dans un mode maître, le dispositif de commande du véhicule (10) émet des signaux de commande pour les composants (12, 14, 16) fonctionnants dans un mode suiveur,
• comme un des composants, l'unité d'affichage (16) reçoit et affiche des signaux de commande et données relatifs à des conditions du chariot de manutention du dispositif de commande du véhicule (10) à afficher dans le mode suiveur,
• et la batterie comporte plusieurs cellules de batterie et une commande de batterie (22), qui surveille la condition des cellules de batterie,
**caractérisé en ce que**
• dans un mode maître, l'unité d'affichage (16) demande, recoit et affiche des conditions de la batterie à afficher de la commande de batterie (22).

2. Chariot de manutetion selon la revendication 1, **caractérisé en ce que** l'unité d'affichage (16) est conçue à recevoir des conditions de la batterie à être affiché du dispositif de commande du véhicule (10) dans le mode suiveur.

3. Chariot de manutetion selon la revendication 1 ou 2, **caractérisé en ce que** un chargeur (28) est en outré prévu au-dedans du ou sur le véhicule, qui est relié à l'unité d'affichage (16) fonctionnant dans le mode maître, et l'unité d'affichage (16) transmet des données de la commande de batterie au chargeur (28) fonctionnant dans le mode suiveur.

4. Chariot de manutetion selon une des revendications 1 à 3, **caractérisé en ce que** quand un chargeur externe (30) est relié à la batterie il échange données et signaux de commande avec la commande de batterie (22) pendant le procès de chargement dans le mode maître.

5. Chariot de manutetion selon une des revendications 1 à 4, **caractérisé en ce que** pendant un procès de chargement, l'unité d'affichage (16) applique un signal enclenchant un système d'immobilisation du véhicule au dispositif de commande du véhicule (10).

6. Chariot de manutetion selon une des revendications 1 à 5, **caractérisé en ce que** la batterie est réalisée comme une batterie à ions, notamment une batterie lithium-ion.

7. Chariot de manutetion selon une des revendications 1 à 6, **caractérisé en ce que** le réseau de bus est realisé comme un réséau de bus CAN.
